Europäisches Patentamt

European Patent Office

Office européen des brevets

(11) Publication number: **0 585 984 B1**

## EUROPEAN PATENT SPECIFICATION

(45) Date of publication of patent specification: **06.12.95**   (51) Int. Cl.⁶: **F01N  3/20**, F23N 5/20

(21) Application number: **93202106.6**

(22) Date of filing: **19.07.93**

(54) Method and apparatus for heating internal combustion engine exhaust gas.

(30) Priority: **28.08.92 US 936467**
**31.08.92 US 937026**

(43) Date of publication of application:
**09.03.94 Bulletin  94/10**

(45) Publication of the grant of the patent:
**06.12.95 Bulletin  95/49**

(84) Designated Contracting States:
**DE FR GB**

(56) References cited:
**EP-A- 0 114 696**
**EP-A- 0 117 534**
**DE-A- 1 594 710**
**DE-A- 4 142 841**
**FR-A- 2 512 928**

**PATENT ABSTRACTS OF JAPAN vol. 14, no.
228 (M-973) 15 May 1990 & JP-A-02 057 821
(MATSUSHITA ELECTRIC) 27 February 1990**

(73) Proprietor: **GENERAL MOTORS CORPORA-
TION**
**General Motors Building**
**3044 West Grand Boulevard**
**Detroit**
**Michigan 48202 (US)**

(72) Inventor: **Gonze, Eugene Victor**
**43264 Vivian Drive**
**Sterling Heights,**
**Michigan 48313 (US)**
Inventor: **Stark, Terrance Lee**
**56777 St James**
**Washington,**
**Michigan 48094 (US)**

(74) Representative: **Denton, Michael John et al**
**Patent Section**
**1st Floor**
**Gideon House**
**28 Chapel Street**
**Luton**
**Bedfordshire LU1 2SE (GB)**

## Description

This invention relates to a method and apparatus for heating internal combustion engine exhaust gas.

It is generally known that undesirable emissions of an internal combustion engine may be significantly reduced by passing the engine exhaust gas through a catalytic converter. When conventional converters are at light-off temperatures, such as temperatures above 350 degrees Celsius, exothermic reactions occur therein, resulting in efficient reduction of engine emissions. Converter temperature may be elevated to light-off temperature from latent exhaust gas heat. On cold start, a converter heated with latent exhaust gas heat may, under normal engine warm-up conditions, require 75 seconds or more to reach its light-off temperature.

Additional heat sources have been proposed for more rapid heating of the converter, so that efficient conversion of undesirable exhaust gas constituents may begin earlier after engine cold start. For instance, electrically heated converters have been proposed, in which electrical energy is selectively applied to a device which converts the electrical energy to thermal energy, which is made available to the converter. The efficiency of such heating systems requires that substantial electrical energy be expended before any significant emission reductions may be provided. Alternatively, burner systems have been proposed for rapid heating of the converter. An example of such systems is provided in copending United States application No 936,467 (US-A 5 320 523) or in DE-A-1 594 710. Such systems attempt to ignite an air/fuel mixture at a point upstream of the converter, whereby the released combustion energy operates to increase converter temperature rapidly. Although not suffering from the drawbacks of electrically heated units, such systems require co-ordinated control of a fuel input, an air input and ignition to ensure that the air/fuel mixture ignites as soon as possible at engine start-up and that, once lit, the burner expediently heats the catalytic converter to its light-off temperature.

The present invention seeks to provide an improved method and apparatus for heating internal combustion engine exhaust gas.

According to an aspect of the present invention, there is provided a method of heating internal combustion engine exhaust gas as specified in claim 1.

According to another aspect of the present invention, there is provided apparatus for heating internal combustion engine exhaust gas as specified in claim 5.

In a preferred embodiment, there is provided burner control which can minimises the time to combustion in a burner system and which can, once combustion is present in the burner, maximise the heat energy delivered by the burner system to the exhaust gas stream and to the catalytic converter.

Preferably, air and fuel quantities are issued to a burner in appropriate proportions to be quickly ignited by a periodic ignition source, such as a spark plug. Once combustion is assumed to be present in the burner, such as from information provided by a combustion sensing routine or after fuel and spark have been appropriately provided to the burner for a predetermined period of time, air and fuel are preferably admitted to the burner in a predetermined proportion with consideration to the physical constraints of the system to provide a maximum heat energy to the catalytic converter until it may be assumed that the converter is substantially at its light-off temperature. The burner may then operate for a predetermined period of time to maintain the converter at a suitable temperature, or may be disabled.

An embodiment of the present invention is described below, by way of illustration only, with reference to the accompanying drawings, in which:

Figure 1 is a schematic diagram of an embodiment of exhaust burner assembly for a catalytic converter;

Figure 2 is a flow chart of an embodiment of control routine for the exhaust burner assembly of Figure 1;

Figures 3A to 3C are a flow chart of an embodiment of control routine for the exhaust burner assembly of Figure 1; and

Figures 4a and 4b are timing diagrams of fuel and air commands generated in the routines of Figures 2 and 3A to 3C.

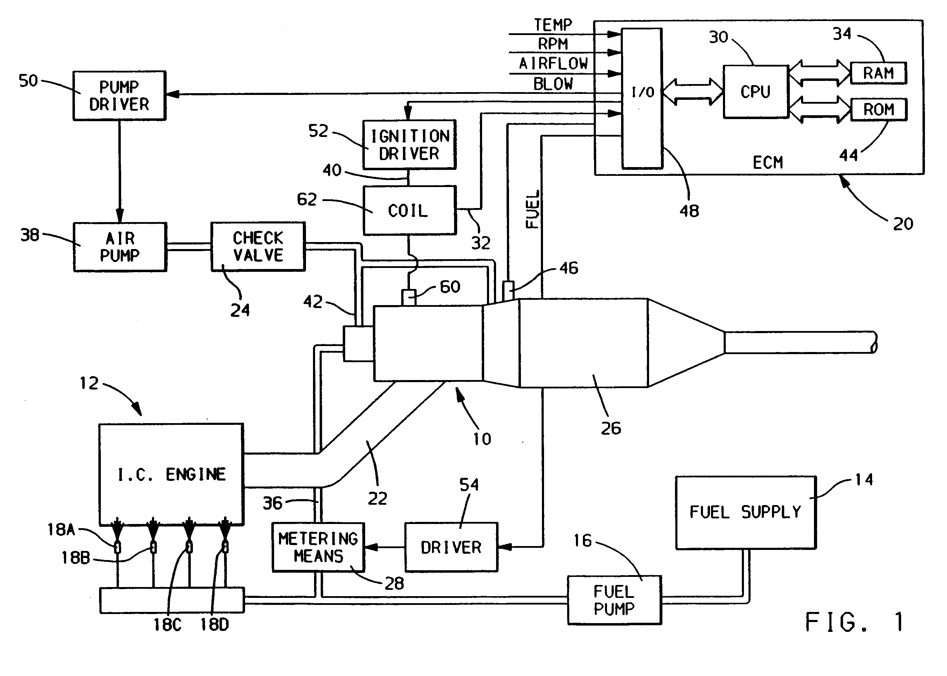

Referring to Figure 1, an embodiment of exhaust burner assembly 10 for an internal combustion engine 12 is disposed in the exhaust system in such a manner that exhaust gas passes from the engine 12 to the burner assembly 10 via an exhaust conduit 22. The burner assembly 10 is operably connected to a catalytic converter 26 through which the exhaust gas passes after exiting the burner assembly.

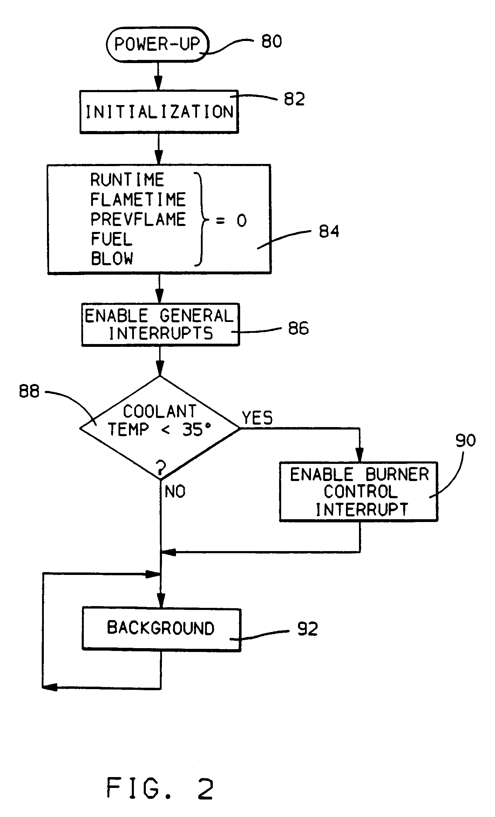

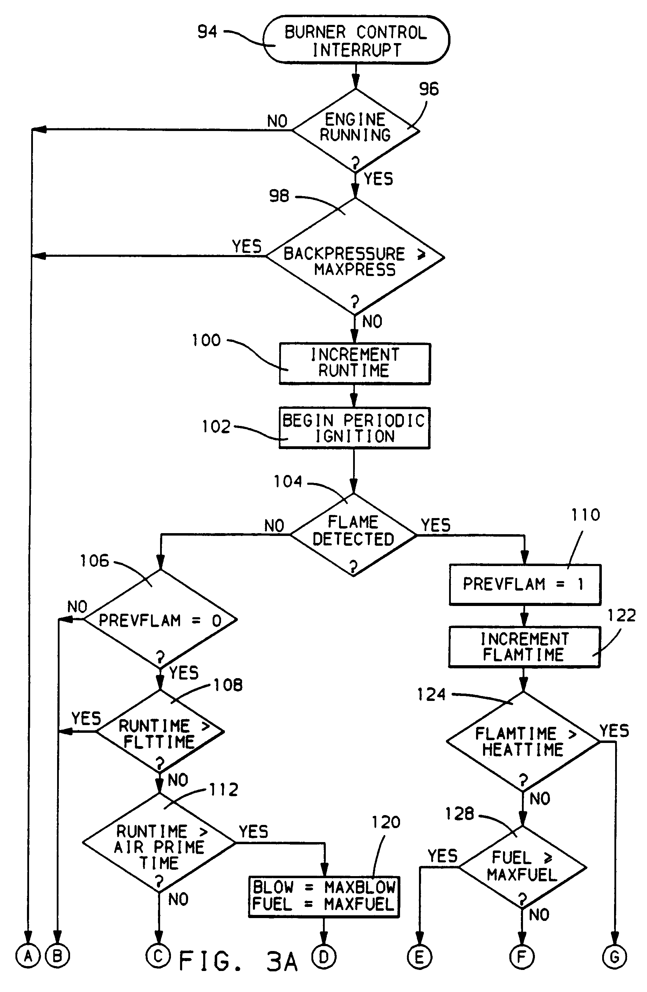

A conventional engine controller 20, such as an engine control module monitors engine parameters through sensors (not shown) and varies fuel, air and spark to the engine accordingly. The engine control module 20 may be an eight-bit, single chip microprocessor , such as a Motorola MC68HC11, with a central processing unit 30 which executes a series of routines for general engine and burner control, including in this embodiment the routines illustrated in Figures 2 and 3A to 3C. The central processing unit 30 reads the routines and various predetermined data constants from read only memory (ROM) 44 and stores and accesses data in a well-known manner from random access memory (RAM) 34. The engine control module 20 communicates input and output information via input/output unit 48.

Combustion air is supplied to the burner assembly 10 from an engine driven or electrical air pump 38 via conduit 42. The pump 38 receives its air from an air cleaner not shown. The pump 38 is controlled by the engine control module 20 via a pump driver circuit 50 so that a proper quantity of air is administered to the burner assembly 10 at appropriate times. The engine control module 20 determines the air quantity required to produce a desired air/fuel ratio in the burner 10 and then determines the pump drive current needed to deliver the required amount of air. A scaled current command BLOW, representing the required amount of current, is issued to pump driver circuit 50 via input/output unit 48 at appropriate times. The driver circuit 50 may be any conventional current control circuit capable of taking the scaled current command BLOW and driving the pump 38 at a level of current substantially proportional to BLOW. For example, in the case where the pump actuator is a direct current device, BLOW represents a level of direct current to be applied to the pump 38, such as by operating a gate driver which provides a substantially fixed level of voltage to the pump at a duty cycle proportional to the desired current level.

The air from the pump 38 passes through a check valve 24 before reaching the burner assembly 10. The check valve 24 may be a conventional one-way valve which prevents exhaust gas back flow into the pump 38. The valve passes virtually no air when closed and has minimum airflow restriction when open. The valve 24 may be opened when upstream air pressure significantly exceeds downstream air pressure, such as from operation of the air pump 38.

The engine 12 is supplied with fuel from a fuel system comprising fuel supply 14, such as a fuel tank, and fuel pump 16 which delivers pressurised fuel to a fuel meter 28 and to fuel injectors 18a-18d. The fuel meter 28 may be a conventional fuel injector or fluid pressure regulator, or a fuel pump, and is controlled by engine control module 20 to meter appropriate amounts of fuel to burner assembly 10, via conduit 36, at appropriate times.

The engine control module 20 determines the fuel quantity required to produce a desired air/fuel ratio in the burner assembly 10 and, when using a conventional fuel injector with a 1 gram per second gasoline metering capacity, determines a fuel injection duration command FUEL to allow the injection pulse required to inject that fuel quantity to the fuel conduit 36. The fuel quantity FUEL is loaded into an output register in input/output unit 48 and is issued to a fuel meter driver 54. The driver 54 converts the command FUEL to a pulse duration for an injector drive pulse. The pulse duration is the amount of time the injector will be held open for each of its periodic injections. In this embodiment, for stable combustion, the commanded pulse width is fed to the injector approximately every 5 milliseconds. Conventional fuel delivery means, such as a nozzle, is used to administer the metered fuel to the burner assembly 10 from conduit 36.

In the preferred embodiment, a conventional spark plug 60 is used to ignite an air/fuel mixture in the burner assembly 10 and is excited in a well-known manner. A periodic control pulse is issued from the engine control module 20 to ignition driver circuit 52, which may include a conventional step-up transformer not shown gated on and off via the control pulse. While switched on, the transformer charges the spark plug, while when it is switched off, the transformer discharges the spark plug through drive line 40 and across the air gap in the spark plug 60 from cathode to anode, providing a spark. Any other means of providing ignition to an air/fuel mixture may be used, such as a conventional glow plug or an electrically conductive heating coil.

Burner combustion detection may be provided using the combustion detection method and apparatus described in our co-pending European patent application 576068. In general, a sense coil 62 of approximately 200 turns, such as a Wabash Magnetics solenoid part no. 5234214, surrounds the spark plug drive line 40 in such a manner that changes in current through the excitation line 40 will induce current through coil 62 and thus will induce potential across the coil, which may be monitored by the engine control module 20 by sensing that potential, for instance the potential between coil tap 32 and electrical ground.

In the absence of flame in burner assembly 10, a comparatively large voltage spike will appear across coil 62 shortly after the surge of spark inducing current passes through drive line 40. However, a comparatively small spike will appear across coil 62 when flame is present, due to an ionisation effect in which current carrying ions are provided across the spark plug gap by flame in proximity to the gap, reducing the resistance across the gap. By distinguishing between the two spikes, as described in EP-A-576068, the engine control module 20 may rapidly and reliably determine whether flame is present in burner assembly 10.

The temperature of catalytic converter 26 is monitored using temperature sensor 46, such as a conventional thermocouple or thermistor. The monitored temperature is communicated to engine control module 20.

The embodiments of routines illustrated in Figures 2 and 3A to 3C may be stored in non-volatile memory in engine control module 20, such as in read only memory 44 and are accessed on an instruction by instruction basis by central processing unit 30. The first of such routines is accessed when power is applied to the engine control module 20, such as when the driver turns the ignition key to the "ON" position. This routine is illustrated in Figure 2 and is entered at step 80. The routine proceeds to step 82 to carry out general software initialisation, such as assigning initial values to counters, flags and pointers, and reading analogue inputs from various sensors, such as an engine coolant temperature sensor not shown. Analogue inputs are converted to digital approximations via conventional analogue to digital converters and are stored in read only designated areas of random access memory 34.

Next, the routine proceeds to step 84 to carry out initialisation directed specifically to burner control in accord with this embodiment. At this point, RAM variables RUNTIME, FLAMTIME, PREVFLAM, FUEL and BLOW, described below, are set to zero. The routine then advances to step 86 to enable interrupts used in general engine control. Such interrupts are initialised to occur periodically, either after some predetermined time has elapsed or upon the occurrence of some event. Routines used to service these interrupts are provided in a well-known manner.

Next, at step 88, engine coolant temperature read from the engine coolant temperature sensor at step 82 is compared to a predetermined threshold temperature. Coolant temperature provides information on both engine temperature and exhaust system temperature, and thus may be used to estimate when the engine and exhaust system is of sufficient temperature that any supplemental heating which may be provided by the burner 10 is not necessary. Such would be the case when it is estimated at step 88 that the converter is at or close to its light-off temperature. An appropriate coolant threshold temperature may be determined in a calibration step, by selecting an engine start-up coolant temperature which indicates a system, including the engine and exhaust system, that will quickly heat the converter 26 to its light-off temperature. In this embodiment, the threshold temperature is calibrated at 35 degrees Celsius.

Accordingly, at step 88, if coolant temperature exceeds or is equal to 35 degrees Celsius, the routine does not enable the burner control interrupt by bypassing step 90. However, if coolant temperature is below 35 degrees Celsius, the routine moves to step 90 to enable the burner control interrupt. In this embodiment, the interrupt is enabled to occur after a preset period of time has elapsed, such as 100 milliseconds. The interrupt is set up to vector processor control to the routine illustrated in Figures 3A-3C, which will instruct the central processing unit 30 to re-enable the interrupt to occur approximately 100 milliseconds after its last occurrence. This process of repeating the interrupt invoking the routine of Figures 3A-3C will continue until a fault is detected in the burner system or until the burner system has completed its heating task, such as after a predetermined period of time has elapsed.

After enabling the burner control interrupt at step 90, or if step 90 was bypassed by step 88, the routine advances to step 92 continuously to carry out background functions while the engine control module 20 is operating. The background functions may include conventional diagnostic or maintenance routines, and are interrupted upon the occurrence of one of the enabled interrupts.

Referring to the specific routine of Figures 3A-3C, this routine provides for control and general diagnostics of the burner system illustrated in Figure 1, including control of air, fuel and spark consistent with two main control goals. The first goal is to ignite an air/fuel mixture in the burner 10 as soon as possible on cold start. In the preferred embodiment, combustion is attempted after the engine 12 is determined to be running. However, for even earlier combustion, the air/fuel mixture may be admitted to and ignited in the burner 10 as soon as power is applied to the engine control module 20, such as when the vehicle ignition is first switched on.

Such combustion requires an appropriate and precise blending of air and fuel, together with a periodic spark in the burner. First, the air and fuel conduits are primed, then an easily ignitable combination of air and fuel is provided to the burner assembly 10 together with a periodic spark signal. Once the first goal of initial combustion is met, which may be indicated by a flame detector in the burner, the second goal is provided for by controlled heating of the catalytic converter, including a maximum heating mode and a hold temperature mode.

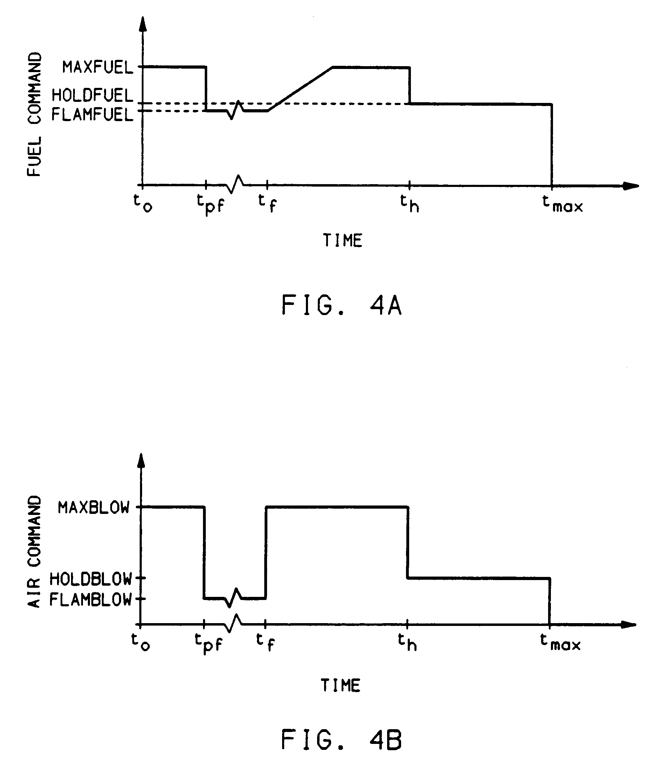

Figures 4a and 4b are general timing diagrams of the fuel and air commands over the time the burner 10 is operating. Fuel and air commands may be issued to the respective actuators as generally illustrated in Figures 4a and 4b to provide for the above-described first and second goals. Specifically, the fuel system is primed at MAXFUEL from time $t_o$ until $t_{pf}$, and the air system is primed at a command MAXBLOW from time to until $t_{pa}$. After priming is complete, the fuel and air commands are reduced to FLAMFUEL and FLAMBLOW, respectively, to provide appropriate conditions for combustion in the burner 10.

When combustion is detected, such as at time $t_f$ in Figures 4a and 4b, the fuel and air commands are increased rapidly to provide for maximum exhaust gas heating. The commands are limited to predetermined maximum values and, when a predetermined amount of heat energy has been transferred to the exhaust gas, such as at time $t_h$ in Figures 4a and 4b, the fuel and air commands may be reduced to zero, or to levels sufficient to hold the converter 26 at a desirable temperature, such as its light-off temperature. Finally, when latent engine exhaust gas heat alone may be sufficient to maintain the converter 26 at light-off, the burner's job in any case is complete and the fuel and air commands are reduced to zero disabling the burner 10.

Returning to Figure 3A, the specific routine shown is entered at step 94 upon the occurrence of the described 100 millisecond burner control interrupt. The routine then moves to step 96 to determine if the engine is running, for example by reading engine speed RPM from a conventional engine speed sensor. If the engine is not running, which may be determined by a near zero sensed engine speed, the routine moves to step 144 to disable the burner 10. The burner is disabled by commanding zero air and fuel to the burner, such as by setting the air and fuel commands BLOW and FUEL to zero, and by stopping any spark plug ignition. The burner 10 is disabled to avoid unnecessary exhaust gas heating which may overheat the converter 26 and which inefficiently expends fuel.

Alternatively at step 96, if the engine is determined to be running, the routine proceeds to step 98 to compare engine back pressure to a predetermined back pressure MAXPRESS. Back pressure, the air pressure in the engine exhaust path, is related to the amount of air being pumped through the engine to the exhaust system and to the restrictiveness of the exhaust system. The restrictiveness is substantially constant, and may be measured in a calibration step. By then measuring instantaneous airflow into the engine, for example using a conventional airmeter not shown, back pressure may be determined such as by looking up a back pressure value stored in read only memory 44 corresponding to the instantaneous airflow. The stored back pressure values may be determined for several airflow lookup values according to the following expression

$$\text{back pressure} = \text{airflow} * 4.571,$$

where in this embodiment back pressure is expressed in units of kiloPascals, and airflow is expressed in grams per second.

For high engine back pressure, such as back pressure above MAXPRESS, which is set to eight kiloPascals in this embodiment, the amount of air delivered by the pump 38 will be substantially reduced to the extent that so little fresh air will be provided to the burner assembly that any combustion therein is not likely to be sustainable. This is due to the necessity of a significant pressure drop along the fresh air path before air will flow from the high to low pressure points in the path. Such a pressure drop will be reduced with high back pressure, which will be present in the burner 10, so that the pressure drop from the pump 38 to the burner 10 will not support adequate airflow.

In this embodiment, rather than attempt to drive air and fuel into the burner when back pressure exceeds MAXPRESS and sustained combustion is unlikely, the routine moves to step 144 to disable the burner in the manner described. However, if the back pressure is below MAXPRESS, such that combustion may be sustained in the burner 10, the routine proceeds to step 100 to increment RUNTIME, a random access memory variable used to maintain a count of the number of iterations of the routine of Figures 3A-3C since it was last enabled at step 90 of Figure 2, as a time reference for use later in the routine.

After incrementing RUNTIME at step 100, the routine advances to step 102 to enable a periodic spark control pulse of predetermined duration to be issued from input/output unit 48 to the ignition driver circuit 52. In one embodiment, the pulse is enabled to be issued automatically at a predetermined frequency high enough to ignite the burner rapidly, such as 110 Hertz, and is of sufficient duration, such as 6 milliseconds, to charge up adequately the transformer (not shown) in the driver circuit 52. The periodic pulse, once enabled at step 102, will continue to be issued to the driver circuit 52 while the burner 10 is operating.

Next, the routine advances to step 104 to check for the presence of flame in the burner assembly 10. As described in our above-mentioned European application 576068, combustion in the burner assembly 10 may be detected by monitoring the voltage across coil 32 while the ignition driver circuit 52 is issuing spark enable pulses. According to this copending application, if the voltage across coil 30 exceeds a predetermined voltage for a predetermined number of iterations of the combustion detection routine of that application, combustion is assumed to not be present in the burner 10.

In such a case where flame is assumed to not be present, the routine of Figure 3A proceeds to step 106 to determine if flame had existed previously in the burner 10, as evidenced by variable PREVFLAM being set to one. If PREVFLAM is set to one, a fault is assumed to exist in the burner, as the flame that was once present is now extinguished. In such a case, the routine proceeds to indicate the fault at step 142, for example by storing a fault code in engine control module non-volatile memory, such as in a portion of random access memory 34 which is not cleared when the engine control module 20 is not operating. The fault may also be indicated by illuminating a light in position to be viewed by the driver. The routine then disables the burner at step 144, rather than continue to operate when the system is assumed to be incapable of sustaining combustion.

Alternatively, at step 106, if no previous flame was detected, the routine moves to step 108 to compare RUNTIME to a predetermined time limit FLTTIME, representative of the maximum amount of time allowed to ignite the air/fuel mixture in the burner 10. If combustion is not sensed by the time RUNTIME is incremented to FLTTIME, the opportunity substantially to reduce engine cold start emissions is assumed to be lost. Furthermore, if FLTTIME is properly calibrated, a flame should, under normal operating conditions, be present in the burner before FLTTIME is reached.

Accordingly, if RUNTIME exceeds FLTTIME at step 108, the routine moves to step 142 to indicate a fault in the system, in the manner described above. After indicating the fault, the routine proceeds to disable the burner at step 144.

Returning to step 108, if RUNTIME does not exceed FLTTIME, the routine proceeds to steps 112-120 to provide air and fuel to the burner in accord with the pre-combustion phase the burner control is in. Prior to combustion in the burner 10, a first phase of burner control provides a priming of the air and fuel lines. A second phase provides appropriate conditions for combustion in the burner 10. In detail, if at step 112 RUNTIME is less than AIR PRIME TIME, shown as time $t_{pa}$ in Figure 4b, the first pre-combustion phase is active in which the air conduit 42 and the fuel conduit 36 is primed. Priming of these conduits involves pumping air or fuel through them so as to ensure a fluid pressure level in the conduits that will support precise delivery of desirable quantities of air and fuel to the burner 10. The amount of time needed to prime the air and fuel conduits may be pre-calibrated for the system and may be minimised, consistent with the goal of rapid exhaust gas heating, by pumping air and fuel through the respective conduits at as high a pumping rate as is reasonable. In this embodiment, at the maximum air pumping rate, the air prime time is calibrated to be approximately 400 milliseconds or, for the 100 millisecond iteration rate of the routine of Figure 3A, AIR PRIME TIME is set to 4.

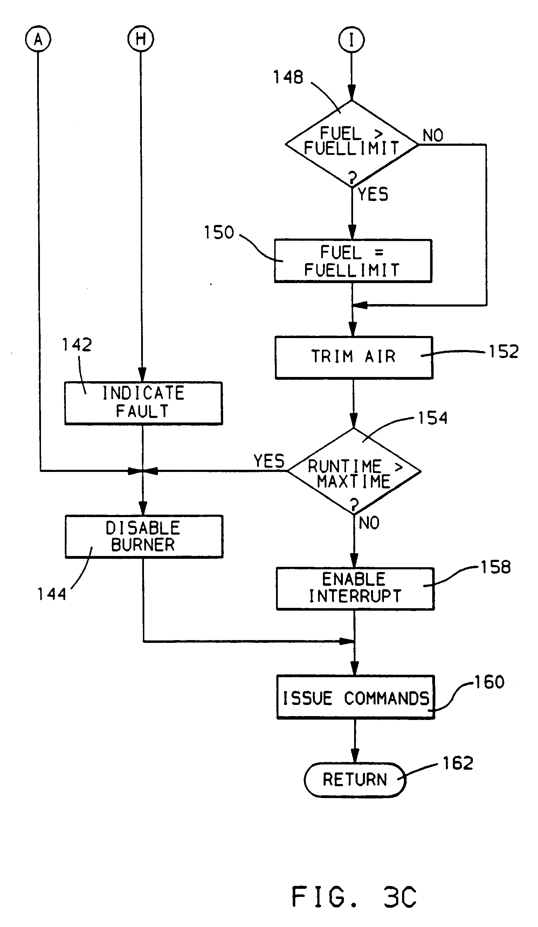

If at step 112 RUNTIME does not exceed AIR PRIME TIME, the routine moves to step 120 to assign the value MAXBLOW to variable BLOW. MAXBLOW represents a selected maximum operating rate for the air pump 38 and is constrained by the pump's rated maximum operating level and the power available from the vehicle power system. In this embodiment, MAXBLOW is assigned the value 255, representing that the pump will be driven at 100 percent of its capacity. BLOW is directly proportional to the commanded current at which the pump 38 is driven and is issued to pump driver circuit 50 later, in the steps of Figure 3C.

Additionally, at step 120, the variable FUEL is assigned the value MAXFUEL, a predetermined value representing a maximum commanded flow rate for fuel into the burner assembly 10. This may be provided in a conventional manner in the case where the fuel meter 28 is a conventional fuel injector, by commanding a maximum injector pulse width or duty cycle. In this embodiment, MAXFUEL corresponds to a 74 percent injection duty cycle for the injector 28.

Due to the physical differences between the fluids of fuel and air, the fuel and air conduits, and the fuel and air pumps or metering means, different prime times are required for air and fuel. In this embodiment, fuel priming takes more time than air priming, such that at step 120 FUEL will be assigned the value MAXFUEL as long as air is being primed and maybe longer, as is discussed below.

Returning to step 112, if RUNTIME exceeds a properly calibrated AIR PRIME TIME, shown in Figure 4B as $t_{pa}$, the air conduit 42 may be assumed to be sufficiently primed for burner control purposes. Accordingly, the routine moves to step 114 to reduce the commanded air flow into the burner, consistent with pre-combustion phase two, to a setting calibrated for the specific hardware of Figure 1 to be most conducive to rapid start of combustion in burner assembly 10. This value is labelled FLAMBLOW and in this embodiment is set at twenty percent of blower capacity.

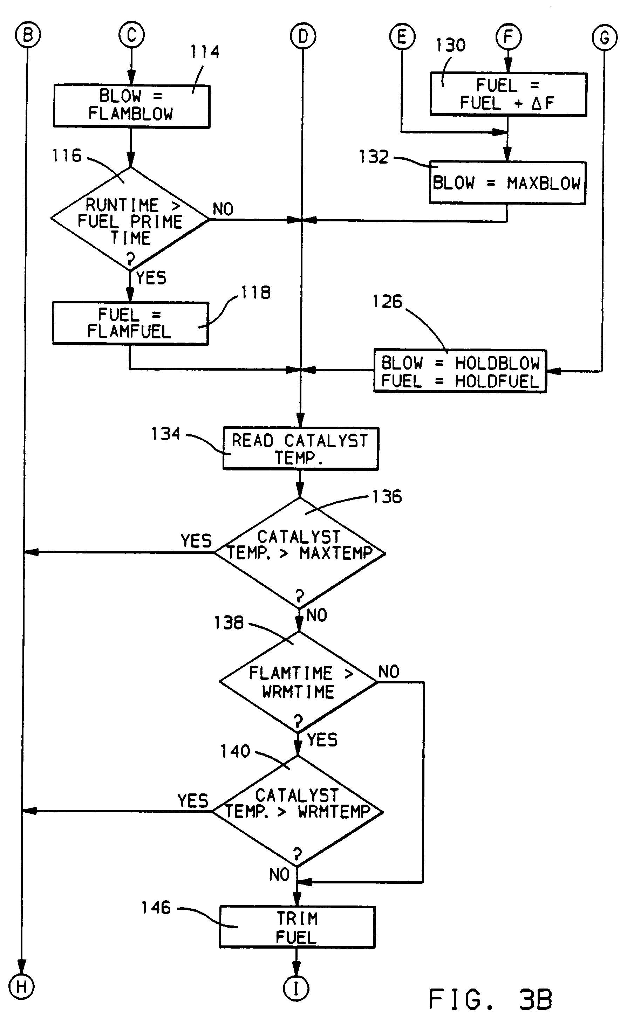

The routine then proceeds to step 116 to compare RUNTIME to FUEL PRIME TIME, which is a calibrated number of iterations of the routine of Figures 3A-3C needed for a priming of the fuel conduit 36. If RUNTIME exceeds FUEL PRIME TIME, which is set to 7 in this embodiment meaning that the fuel conduit 36 will be primed for approximately 700 milliseconds, pressure is assumed to have built up in the fuel conduit 36 so that sufficiently precise metering of fuel into the burner itself may now occur for rapid start of combustion therein. This time is shown in Figure 4A as $t_{pf}$. At this time, the routine advances to step 118 to reduce commanded fuel to an amount most conducive to a start of combustion in the burner of Figure 1, consistent with pre-combustion phase two. In this embodiment, FUEL is set to FLAMFUEL, for example corresponding to 45 percent injector duty cycle. After setting appropriate values for fuel and air at step 114, 118 or 120, the routine of Figure 3B moves to step 134.

Returning to step 104, if flame is detected in burner assembly 10, such as illustrated at time $t_f$ of Figures 4A and 4B, the routine proceeds to step 110 to set PREVFLAM to one to indicate that flame has been detected in the burner 10. Next, the routine moves to step 122 to increment a variable FLAMTIME used to keep a running count of the number of iterations of the routine of Figure 3A in which flame has been detected in burner assembly. The routine then advances to steps 124-132 to tailor the air and fuel commands according to which post-combustion phase of operation the burner control is in. A first post-combustion phase attempts to provide maximum heat energy to the exhaust gas. A second phase, which is optional, then attempts to hold that converter 26 at a temperature of sufficient magnitude to support exothermic activity therein, such as the light-off temperature of the converter 26, for a predetermined period of time.

Specifically, the routine executes step 124 where FLAMTIME is compared to HEATTIME, which is a predetermined number corresponding to the number of iterations of the routine of Figures 3A-3C needed, when flame is present in burner assembly 10, to provide sufficient heat energy to the exhaust gas so as to heat catalytic converter 26 substantially to its light-off temperature. HEATTIME may be determined on the basis of the amount of energy generated in the burner 10 and passed to the converter 26, for instance by monitoring converter temperature change over time in a calibration step. In this embodiment, HEATTIME is set to 200, corresponding approximately to 20 seconds, due to the 100 millisecond iteration rate of the routine of Figures 3A-3C.

If FLAMTIME is less than HEATTIME at step 124, more heating of the converter 26 is assumed to be necessary to reach light-off and the routine proceeds to steps 128 to 132 to provide maximum fuel and air to the burner 10. First, at step 128, FUEL is compared to MAXFUEL, the maximum allowable fuel command for the fuel meter 28. If FUEL exceeds or is equal to MAXFUEL at step 128, it is limited to MAXFUEL. Otherwise, FUEL is increased by an amount $\delta F$ at step 130. Accordingly, FUEL is increased by $\delta F$, set to three percent duty cycle in this embodiment, at step 130. This incremental increase in injector duty cycle provides a substantially linear increase, approximately 3 percent duty cycle per 100 milliseconds, in fuelling to the burner 10. Such an increase starts from the initial command FLAMFUEL to a maximum command MAXFUEL. This restricts the increase of fuel to the burner to an amount proportional to the build-up of air in the burner, so that fuel and air may increase in controlled relative proportion during the heating phase of the burner control.

The inertial and frictional loads on the air pump 38, combined with the compressibility of air, limits the rate at which airflow can increase to the burner 10. Since such constraints are not necessarily present on fuel flow rate into the burner 10, the fuel increase must be controlled, for example by increasing from a start-up value to the maximum value in a gradual manner so that a beneficial relative proportion of fuel and air may be provided to the burner 10 for proper combustion. While a range of air/fuel ratios in the burner will support adequate combustion, the inventors have selected an air/fuel ratio of approximately 16 to 1 as being preferred during this heating phase of the burner 10.

Accordingly, in order to provide maximum heat energy into the converter at a desired air/fuel ratio, this routine will command a maximum air flow from pump 38 to allow the airflow to build up as rapidly as possible and will graduate the fuel command at step 130 from the FLAMFUEL level of fuel used initially to ignite the burner at step 120 to MAXFUEL, at a rate calibrated substantially to maintain a stoichiometric ratio while airflow is building up. This calibration may be provided by monitoring the build-up of airflow through conduit 42 over a period of time after a step change in commanded air from the FLAMBLOW command to the MAXBLOW command, such as is done at time $t_f$ in Figure 4B.

Returning to step 130, after increasing the command FUEL by an amount $\delta F$, or if FUEL has already been increased to MAXFUEL as determined at step 128, the routine advances to step 132 to set the air command BLOW to MAXBLOW, a predetermined maximum commanded airflow, to provide the maximum build-up of air into the burner 10. In this embodiment, MAXBLOW is set as 255, or 100 percent of pump rated capacity. The routine then moves to step 134.

Referring again to step 124, if FLAMTIME exceeds HEATTIME, such as illustrated at time $t_h$ in Figures 4A and 4B, it is assumed that sufficient combustion energy has been provided to the exhaust gas to heat the catalytic converter 26 substantially to its light-off temperature. The routine may then proceed to step 126 to cut back the air and fuel commands to the burner 10 on the basis of a second phase of post-combustion burner control in which the burner operates to hold the converter 26 at a predetermined temperature sufficient to support exothermic activity in the converter 26. This mode operates until the exhaust gas is assumed to be at a temperature at which its heat alone can maintain such converter activity. It should be noted that the heating characteristics of certain engine-converter combinations may be such that this temperature hold phase is not needed.

The timing used to switch from the first post-combustion mode (temperature increase mode), illustrated in Figures 3A and 3B as steps 128-132, to the second mode (maintain temperature mode) illustrated by step 126, requires a calibration of the specific burner system used in the application. The calibration must include a determination of the amount of time necessary to heat the catalyst at cold start conditions to its light-off temperature. In this embodiment, this time is calibrated as 20 seconds, meaning that, under the 100 millisecond repetition rate of the routine of Figures 3A-3C, HEATTIME must be set to 200.

However, this timing may be avoided by monitoring catalytic converter temperature directly, such as periodically reading temperature sensor 46, and by switching from the first to the second post-combustion phase when the converter temperature is sensed to be approximately at light-off, such as approximately 500 degrees Celsius.

Specifically, at step 126, the air command BLOW is reduced to approximately 38 per cent of its rated capacity and fuel is reduced to 47 percent duty cycle, such that only enough heat energy will be released by burner 10 to maintain the converter temperature substantially at or above 500 degrees Celsius.

After setting appropriate BLOW and FUEL commands at steps 104-132, the routine passes to step 134 to read the temperature of the catalytic converter 26 from sensor 46. Next, at step 136, if the sensed converter temperature exceeds MAXTEMP, a calibrated maximum tolerable converter temperature, for instance based on well-known recommended catalytic converter operating temperature limits such as 800 degrees Celsius, a fault is presumed to exist in the burner heating system. The routine thus proceeds to step 142 to indicate a fault. The routine then advances to step 144 to disable the burner if it is still operating, so that the converter temperature is not elevated to a level which may damage the converter 26.

Returning to step 136, if the converter 26 is not overheating, the routine proceeds to step 138 to determine if the converter is "underheating," which is when the converter is determined to be heating more slowly than it should under normal operating conditions. Specifically, if flame has been present in the burner 10 for a predetermined period of time WRMTIME, set to fifteen seconds in this embodiment, the converter temperature should under normal operating conditions such as fault free conditions, be above a minimum threshold temperature MINTEMP, set at 300 degrees Celsius in this embodiment. WRMTIME and MINTEMP are calibrated according to normal heating patterns for a given burner and converter

Accordingly, if FLAMTIME exceeds WRMTIME at step 138, the routine proceeds to step 140 to determine if the sensed temperature of the catalyst, such as from the temperature sensor 46, exceeds the calibrated minimum temperature MINTEMP. If so, or if FLAME TIME does not exceed WRMTIME, the routine proceeds to step 146 to trim the calculated fuel command FUEL.

However, if at step 140, the converter temperature is less than MINTEMP, the routine moves to indicate a heating fault at step 142 and then disables the burner at step 144. The routine then returns to the background routine of Figure 2 without re-enabling the interrupt used to execute the routine of Figures 3A-3C. Accordingly, upon the occurrence of a heating fault, such as at step 106, 108, 136 or 140, a fault is indicated and the routine of Figures 3A-3C is abandoned until the next engine start-up.

Returning to step 146, the fuel pulse width command FUEL is adjusted to compensate for a variety of external factors. One such factor may be the fuel meter drive voltage which may vary with the changing demands put on the vehicle power system. Such variations may affect the precision of the quantity of fuel metered to the burner 10 for a given commanded pulse width. Changes in the drive voltage may be sensed in a conventional manner, such as by directly monitoring changes in vehicle battery voltage or by providing a sense resistor not shown in line with the supply current to the fuel meter 28 and monitoring changes in the voltage drop across the resistor. The command FUEL may then be increased or decreased to the extent necessary to ensure a desired amount of fuel is provided to the burner 10.

Other external factors may include those factors which do not directly affect the amount of fuel metered to the engine for a given command but affect the desired quantity of fuel to be admitted to the burner 10. For instance, it may be desirable to provide the fuel and air to the burner 10 at a predetermined ratio, as described. As such, substantially uncontrollable external factors affecting airflow into the burner are adjusted for in the fuel command at step 146. Such factors may include changes in engine vacuum, in external air pressure and in exhaust gas back pressure.

For reasons well-known in the art, changes in these factors will, for a given pump outlet pressure, directly affect the airflow to the burner and can be compensated for by sensing these factors using conventional sensing means and then compensating the amount of fuel admitted to the burner 10 for the resultant expected amount of air which will reach the burner from the pump 38. Fuel is adjusted rather than air in this embodiment due to its inherent controllability advantages over air. The fuel adjustments for a given change in airflow from these external factors may be predetermined such as in a calibration step and stored in engine control module non-volatile memory, such as read only memory 44 as a look-up table provided as a function of the sensed external factors.

After making any necessary fuel adjustments in the command FUEL at step 146, the routine advances to step 148 to compare FUEL to FUELLIMIT, a maximum tolerable fuel command calibrated for the system of Figure 1. In this embodiment, FUELLIMIT is set to five milliseconds, which is equivalent to 100 percent duty cycle. If FUEL exceeds FUELLIMIT, it is limited to FUELLIMIT at step 150. Next, or if FUEL was not limited at step 150, the routine proceeds to step 152 to correct the commanded airflow to the burner 10. This correction is made for any deviations in the pump drive voltage, such as those resulting from a varying vehicle power supply voltage. As was discussed for step 146, if a change in available power, in this case to the pump 38, is sensed, for example by sensing changes in battery supply voltage, the commanded amount of air from the pump may be changed to provide the desired amount of airflow to the burner 10.

After trimming the pump command for any changes in pump drive voltage at step 152, the routine proceeds to step 154 to check the amount of time the routine of Figures 3A-3C has been operating. If it has been operating for longer than MAXTIME, calibrated as sixty seconds in this embodiment and illustrated generally as time $t_{max}$ in Figures 4A and 4B, the routine proceeds to step 144 to disable the burner. As described, burner heating in this embodiment is intended to elevate the catalytic converter 26 rapidly to its light-off temperature. After a period of time, the engine exhaust gas heat is of sufficient temperature that it can maintain converter temperature alone to allow proper exothermic activity in the converter 26. The burner 10 may then be disabled.

Returning to Figure 3C, if RUNTIME did not exceed MAXTIME at step 154, the routine proceeds to step 158 to enable the interrupt which allows execution of this routine such that, in this embodiment, it will occur approximately 100 milliseconds after the last of such interrupts. The routine then proceeds to step 160 to issue the determined fuel command FUEL and the determined air command BLOW to the fuel meter driver 54 and the pump driver 50, respectively. As discussed, the command FUEL will automatically be converted in the driver 54 to an injector pulse-width, in the preferred embodiment, and the command BLOW will be converted in the pump driver 50 to a commanded current level to the pump 38. After issuing the commands at step 160, the routine moves to step 162, where it is directed to return to the background routine of Figure 2.

Returning to step 144, after disabling the burner, such as if RUNTIME exceeded MAXTIME at step 154 or from the described previous steps 96, 98 or 142, the routine moves to step 160, to issue the commands FUEL and BLOW, as discussed. The routine then returns to the background routine of Figure 2, via step 162.

**Claims**

1. A method of heating internal combustion engine exhaust gas supplied to a catalytic converter by igniting an air-fuel mixture in an exhaust gas path of the engine, comprising the steps of preparing for ignition of the air-fuel mixture by metering fuel to the exhaust gas path at a first predetermined fuel rate and metering air to the exhaust gas path at a first predetermined air rate; igniting the metered fuel and air; and providing for exhaust gas heating by adjusting, upon ignition of the metered fuel and air, at least one of the first predetermined fuel rate at a first predetermined time rate of change towards a predetermined first maximum fuel rate and the first predetermined air rate at a second predetermined time rate of change towards a predetermined first maximum air rate.

2. A method according to claim 1, wherein the step of preparing for ignition of the air-fuel mixture comprises the steps of metering fuel to the exhaust gas path at a predetermined second maximum fuel metering rate and reducing the fuel metering rate from the predetermined second maximum fuel metering rate to the first predetermined fuel rate after a first predetermined period of time; and metering air to the exhaust gas path at a predetermined second maximum air metering rate and reducing the air metering rate from the predetermined second maximum air metering rate to the first predetermined air rate after a second predetermined period of time.

3. A method according to claim 1 or 2, wherein the step of providing for exhaust gas heating comprises the steps of limiting the adjusted first predetermined fuel rate to the predetermined first maximum fuel rate and limiting the adjusted first predetermined air rate to the predetermined first maximum air rate; and reducing the limited first predetermined fuel rate to a predetermined fuel hold rate and reducing the limited first predetermined air rate to a predetermined air hold rate when approximately a first predetermined amount of heat energy has been provided to the exhaust gas.

4. A method according to claim 3, including the step of substantially stopping flow of fuel and air to the exhaust gas path when approximately a second predetermined amount of heat energy has been provided to the exhaust gas path.

5. Apparatus for heating internal combustion engine exhaust gas supplied to a catalytic converter by igniting an air-fuel mixture in an internal combustion engine exhaust gas path, comprising a fuel meter (28) metering during operation fuel to the exhaust gas path at a first predetermined fuel rate; an air meter (24) metering during operation air to the exhaust gas path at a first predetermined air rate; ignition means (60) for igniting the metered fuel and air; first adjusting means (20) adjusting during operation the first predetermined fuel rate at a first predetermined time rate of change towards a predetermined first maximum fuel rate upon ignition of the metered fuel and air; and second adjusting means (20) adjusting during operation the first predetermined air rate at a second predetermined time rate of change towards a predetermined first maximum air rate upon ignition of the metered fuel and air.

6. Apparatus according to claim 5, comprising fuel priming means for metering fuel to the exhaust gas path at a predetermined second maximum fuel rate and for reducing the fuel metering rate from the predetermined second maximum fuel rate to the first predetermined fuel rate after a first predetermined period of time; and air priming means for metering air to the exhaust path at a predetermined second maximum air rate, and for reducing the air metering rate from the predetermined second maximum air rate to the first predetermined air rate after a second predetermined period of time.

7. Apparatus according to claim 5 or 6, comprising fuel limiting means (28) for limiting the adjusted first predetermined fuel rate to the predetermined first maximum fuel rate; fuel rate reducing means for reducing the limited fuel rate to a predetermined fuel hold rate when a predetermined amount of heat energy has been supplied to the exhaust gas; air limiting means for limiting the adjusted first predetermined air rate to the predetermined first maximum air rate; and air rate reducing means for reducing the limited air rate to a predetermined air hold rate when the predetermined amount of heat energy has been supplied to the exhaust gas.

8. Apparatus according to claim 7, comprising inhibiting means for inhibiting flow of the metered fuel and air to the exhaust gas path after a second predetermined amount of heat energy has been supplied to the exhaust gas path.

**Patentansprüche**

1. Ein Verfahren zum Erwärmen eines Abgases eines internen Verbrennungsmotors, das an einen katalytischen Wandler geliefert wird, indem eine Luft-Treibstoffmischung in einem Abgasweg des Motors gezündet wird, das die Schritte umfaßt, daß auf die Zündung der Luft-Treibstoffmischung vorbereitet wird, indem Treibstoff an den Abgasweg mit einer ersten vorbestimmten Treibstoffrate zugemessen wird, und Luft an den Abgasweg mit einer ersten vorbestimmten Luftrate zugemessen wird; die zugemessenen Treibstoff und Luft gezündet werden; und für Abgaserwärmung gesorgt wird, indem auf das Zünden von zugemessenen Treibstoff und Luft zumindest eine der ersten vorbestimmten Treibstoffrate bei einer vorbestimmten Zeitrate der Änderung in Richtung auf eine vorbestimmte erste maximale Treibstoffrate und der ersten vorbestimmten Luftrate mit einer zweiten vorbestimmten Zeitänderungsrate in Richtung auf eine erste maximale Luftrate eingestellt wird.

2. Ein Verfahren nach Anspruch 1, worin der Schritt der Vorbereitung auf die Zündung der Luft-Treibstoffmischung die Schritte umfaßt, daß Treibstoff an den Abgasweg mit einer vorbestimmten zweiten maximalen Treibstoffzumessungsrate zugemessen wird, und die Treibstoffzumessungsrate von der vorbestimmten zweiten maximalen Treibstoffzumessungsrate auf die erste vorbestimmte Treibstoffrate nach einer ersten vorbestimmten Zeitperiode verringert wird; und Luft an den Abgasweg mit einer vorbestimmten zweiten maximalen Luftzumessungsrate zugemessen wird und die Luftzumessungsrate von der vorbestimmten zweiten maximalen Luftzumessungsrate zu der ersten vorbestimmten Luftrate nach einer zweiten vorbestimmten Zeitperiode verringert wird.

3. Ein Verfahren nach Anspruch 1 oder 2, worin der Schritt des Vorsehens von Abgaserwärmung die Schritte umfaßt, daß die eingestellte erste vorbestimmte Treibstoffrate auf die vorbestimmte erste maximale Treibstoffrate begrenzt wird und die eingestellte erste vorbestimmte Luftrate auf die vorbestimmte erste maximale Luftrate begrenzt wird; und die begrenzte erste vorbestimmte Treibstoffrate auf eine vorbestimmte Treibstoffhalterate verringert wird, und die begrenzte erste vorbestimmte Luftrate auf eine vorbestimmte Lufthalterate verringert wird, wenn näherungsweise eine erste vorbestimmte Menge an Wärmeenergie an dem Abgas vorgesehen worden ist.

4. Ein Verfahren nach Anspruch 3, das die Schritte umfaßt, daß der Fluß von Treibstoff und Luft zu dem Abgasweg im wesentlichen beendet wird, wenn näherungsweise eine zweite vorbestimmte Menge an Wärmeenergie an dem Abgasweg vorgesehen worden ist.

5. Vorrichtung zum Erwärmen von Abgas eines internen Verbrennungsmotors, das an einen katalytischen Wandler geliefert wird, indem eine Luft-Treibstoffmischung in einem Abgasweg des internen Verbrennungsmotor gezündet wird, mit einem Treibstoffzumesser (28), der während des Betriebs dem Abgasweg mit einer ersten vorbestimmten Treibstoffrate Treibstoff zumißt; einem Luftzumesser (24), der während des Betriebs Luft an den Abgaspfad mit einer ersten vorbestimmten Luftrate zumißt; einem Zündmittel (60) zum Zünden von zugemessenen Treibstoff und Luft; einem ersten Einstellmittel (20), das während des Betriebs die erste vorbestimmte Treibstoffrate mit einer ersten vorbestimmten Zeitänderungsrate in Richtung auf eine erste vorbestimmte maximale Treibstoffrate auf das Zünden von zugemessenen Treibstoff und Luft einstellt; und einem zweiten Einstellmittel (20), das während des Betriebs die erste vorbestimmte Luftrate mit einer zweiten vorbestimmten Zeitänderungsrate in Richtung auf eine vorbestimmte erste maximale Luftrate auf das Zünden von zugemessenen Treibstoff und Luft einstellt.

6. Vorrichtung nach Anspruch 5, mit einem Treibstoffvorbereitungsmittel zum Zumessen von Treibstoff an den Abgasweg mit einer zweiten vorbestimmten maximalen Treibstoffrate und zum Verringern der Treibstoffzumessungsrate von der vorbestimmten zweiten maximalen Treibstoffrate auf die erste vorbestimmte Treibstoffrate nach einer ersten vorbestimmten Zeitperiode; und einem Luftvorbereitungsmittel zum Zumessen von Luft an den Abgasweg mit einer zweiten vorbestimmten maximalen Luftrate und zum Veringern der Luftzumessungsrate von der zweiten vorbestimmten maximalen Luftrate auf die erste vorbestimmte Luftrate nach einer zweiten vorbestimmten Zeitperiode.

7. Vorrichtung nach Anspruch 5 oder 6, mit einem Treibstoffbegrenzungsmittel (28) zum Begrenzen der eingestellten ersten vorbestimmten Treibstoffrate auf die vorbestimmte erste maximale Treibstoffrate; einem Treibstoffraten verringernden Mittel zum Veringern der begrenzten Treibstoffrate auf eine vorbestimmte Treibstoffhalterate, wenn eine vorbestimmte Menge an Wärmeenergie an das Abgas geliefert worden ist; einem Luftbegrenzungsmittel zum Begrenzen der eingestellten ersten vorbestimmten Luftrate auf die vorbestimmte erste maximale Luftrate; und einem Luftratenverringerungsmittel zum Veringern der begrenzten Luftrate auf eine vorbestimmte Lufthalterate, wenn die vorbestimmte Menge an Wärmeenergie an das Abgas geliefert worden ist.

8. Vorrichtung nach Anspruch 7, mit einem Unterdrückungsmittel zum Unterdrücken von Fluß von zugemessenen Treibstoff und Luft an den Abgasweg, nachdem eine zweite vorbestimmte Menge Wärmeenergie an den Abgasweg geliefert worden ist.

**Revendications**

1. Procédé de chauffage du gaz d'échappement d'un moteur à combustion interne fourni à un pot catalytique en allumant un mélange air-combustible dans un chemin de gaz d'échappement du moteur, comprenant les étapes consistant à préparer l'allumage du mélange air-combustible en dosant le combustible allant vers le chemin de gaz d'échappement à un premier taux prédéterminé de combustible et en dosant l'air allant vers le chemin de gaz d'échappement à un premier taux prédéterminé d'air; à allumer le combustible et l'air dosés; et à obtenir le chauffage du gaz d'échappement par le réglage, lors de l'allumage du combustible et de l'air dosés, d'au moins l'un des premiers taux prédéterminés de combustible au niveau d'un premier taux de modification de durée prédéterminée jusqu'à un premier taux maximal prédéterminé de combustible et le premier taux prédéterminé d'air au niveau d'un second taux de modification de durée prédéterminée jusqu'à un premier taux maximal prédéterminé d'air.

2. Procédé selon la revendication 1, dans lequel l'étape consistant à préparer l'allumage du mélange air-combustible comprend les étapes de dosage du combustible allant vers le chemin de gaz d'échappement au niveau du second taux prédéterminé de dosage maximal de combustible et de réduction du taux de dosage de combustible depuis le second taux de dosage maximal prédéterminé de combustible jusqu'au premier taux prédéterminé de combustible après une première période de temps prédéterminée; et le dosage de l'air allant vers le chemin de gaz d'échappement au niveau du second taux maximal prédéterminé de dosage d'air et la réduction du taux de dosage d'air depuis le second taux de dosage maximal prédéterminé d'air jusqu'au premier taux prédéterminé d'air après une seconde période de temps prédéterminée.

3. Procédé selon la revendication 1 ou 2, dans lequel l'étape consistant à obtenir le chauffage de gaz d'échappement comprend les étapes de limitation du premier taux réglé prédéterminé de combustible au niveau du premier taux maximal prédéterminé de combustible et la limitation du premier taux réglé prédéterminé d'air au niveau du premier taux maximal prédéterminé d'air; et de réduction du premier taux prédéterminé de fuel limité au niveau du taux prédéterminé de maintien de fuel et de réduction du premier taux prédéterminé d'air limité au niveau du taux prédéterminé de maintien d'air lorsqu'approximativement une première quantité prédéterminée d'énergie calorifique a été fournie au gaz d'échappement.

4. Procédé selon la revendication 3, comprenant l'étape consistant à arrêter pratiquement la circulation de combustible et d'air vers le chemin de gaz d'échappement lorsqu'approximativement la seconde quantité prédéterminée d'énergie thermique a été fournie à la voie de gaz d'échappement.

5. Dispositif pour le chauffage de gaz d'échappement d'un moteur à combustion interne apporté à un pot catalytique en allumant un mélange air-combustible dans le chemin de gaz d'échappement d'un moteur à combustion interne, comprenant un doseur de combustible (28) dosant, durant le fonctionnement, le combustible allant vers le chemin de gaz d'échappement et ayant un premier taux prédéterminé d'air, un doseur d'air (24) dosant, durant le fonctionnement, l'air allant vers le chemin de gaz d'échappement et ayant un premier taux prédéterminé d'air; un moyen d'allumage (60) pour allumer le combustible et l'air dosés; un premier moyen de réglage (20) réglant, durant le fonctionnement, le premier taux prédéterminé de combustible au niveau d'un premier taux prédéterminé de modification de durée jusqu'à un premier taux prédéterminé de combustible maximal lors de l'allumage du combustible et de l'air dosés; et un second moyen de réglage (20) réglant, durant l'opération, le premier taux prédéterminé d'air au niveau d'un second taux de modification de durée prédéterminé jusqu'à un premier taux maximal prédéterminé d'air lors de l'allumage du combustible et de l'air dosés.

6. Dispositif selon la revendication 5, comprenant un premier moyen d'amorçage de combustible destiné à doser le combustible allant vers le chemin de gaz d'échappement au niveau du second taux maximal prédéterminé de combustible et à réduire le taux de dosage du combustible depuis le second taux de combustible maximal prédéterminé jusqu'au premier taux de combustible prédéterminé après une période de temps prédéterminée; et un moyen d'amorçage d'air pour doser l'air allant vers le chemin d'échappement au niveau du second taux maximal prédéterminé d'air et pour réduire le taux de dosage d'air depuis le second taux maximal prédéterminé d'air jusqu'au premier taux prédéterminé d'air après une seconde période de temps prédéterminée.

7. Dispositif selon la revendication 5 ou 6, comprenant un moyen de limitation de combustible (28) pour limiter le premier taux réglé prédéterminé de combustible au niveau du premier taux maximal prédéterminé de combustible; un moyen de réduction de taux de combustible pour réduire le taux de combustible limité jusqu'à un taux prédéterminé de maintien de combustible lors qu'une quantité prédéterminée d'énergie calorifique a été fournie au gaz d'échappement; un moyen de limitation d'air pour limiter le premier taux d'air réglé prédéterminé jusqu'au premier taux d'air maximal prédéterminé; et un moyen de réduction de taux d'air pour réduire le taux prédéterminé limité d'air au niveau du taux de maintien d'air lorsque la quantité d'énergie calorifique prédéterminée a été fournie au gaz d'échappement.

8. Dispositif selon la revendication 7, comprenant un moyen de suppression pour supprimer la circulation du combustible et de l'air dosés vers le chemin de gaz d'échappement après qu'une seconde quantité prédéterminée d'énergie calorifique a été fournie au chemin de gaz d'échappement.

FIG. 1

FIG. 2

15

94 — BURNER CONTROL
INTERRUPT

96

NO ← ENGINE
RUNNING
?
│ YES

98 — BACKPRESSURE >
YES ← MAXPRESS
?
│ NO

100 — INCREMENT
RUNTIME

102 — BEGIN PERIODIC
IGNITION

104 — FLAME
NO ← DETECTED → YES
?

110 — PREVFLAM = 1

106 — PREVFLAM = 0
NO ← ?
│ YES

108 — RUNTIME >
YES ← FLTTIME
?
│ NO

112 — RUNTIME >
AIR PRIME → YES
TIME
?
│ NO

120 — BLOW = MAXBLOW
FUEL = MAXFUEL

122 — INCREMENT
FLAMTIME

124 — FLAMTIME >
HEATTIME → YES
?
│ NO

128 — FUEL >
YES ← MAXFUEL
?
│ NO

Ⓐ Ⓑ Ⓒ FIG. 3A Ⓓ Ⓔ Ⓕ Ⓖ

FIG. 3B

FIG. 3C

FIG. 4A

FIG. 4B